# FASCICULE DE BREVET EUROPEEN

(11) **EP 3 833 467 B1**
(45) Date de publication et mention de la délivrance du brevet: **07.06.2023**
(21) Numéro de dépôt: 19740412.2
(22) Date de dépôt: 22.07.2019
(51) Int. Cl.: B01F 23/232, B01F 23/233, B01F 25/431, B01F 27/1125, B01F 27/13, B01D 53/18, F28C 3/08, F24F 6/12

(54) **DISPOSITIF ET PROCÉDÉ DE MISE EN CONTACT D'UN FLUX GAZEUX ET D'UN FLUX DE LIQUIDE, ET UTILISATION DU DISPOSITIF**
VORRICHTUNG UND VERFAHREN ZUM INKONTAKTBRINGEN EINES GASSTROMES MIT EINEM FLÜSSIGKEITSSTROM, UND VERWENDUNG DER VORRICHTUNG
DEVICE AND METHOD FOR BRINGING A GAS STREAM AND A LIQUID STREAM INTO CONTACT, AND USE OF THE DEVICE

(30) Priorité: 10.08.2018 FR 1857446
(43) Date de publication de la demande: 16.06.2021
(73) Titulaire: Starklab, 59310 Nomain (FR)
(72) Inventeur: KEUNEBROCK, Audrey, 59310 Nomain (FR)
(74) Mandataire: Matkowska, Franck
(86) Numéro de dépôt international: PCT/EP2019/069716
(87) Numéro de publication internationale: WO 2020/030419

(56) Documents cités:
- EP-A1- 1 749 799
- WO-A1-98/41315
- GB-A- 365 513

## Description

### Domaine technique

La présente invention concerne la mise en contact d'un gaz et d'un liquide dans une enceinte, le gaz et le liquide circulant dans l'enceinte dans la même direction sous forme respectivement d'un flux gazeux et d'un flux de liquide.

### Art antérieur

Dans le domaine industriel, tertiaire ou domestique, il existe de très nombreuses applications dans lesquelles il s'avère nécessaire de mettre en contact un gaz et un liquide. Par exemple, de manière non limitative et non exhaustive, une application consiste à mettre en contact un gaz et un liquide afin de réaliser un échange thermique entre le gaz et le fluide, par exemple pour refroidir le gaz (notamment des gaz de combustion, des fumées industrielles, ...) ou au contraire pour réchauffer le gaz au moyen du liquide ou inversement pour chauffer le liquide ou le refroidir au moyen du gaz. Une autre application consiste à mettre en contact un gaz et un liquide afin d'humidifier ou de déshumidifier le flux gazeux. Une autre application consiste à mettre en contact un gaz et un liquide afin de dépolluer ou filtrer le flux gazeux, notamment en piégeant dans le liquide certains polluants ou certaines molécules du gaz. Les applications susvisées peuvent bien entendu être combinées entre elles.

Différentes solutions techniques de mise en contact d'un gaz et d'un liquide ont donc été proposées à ce jour.

Parmi ces solutions techniques connues, on peut citer un première solution, qui est décrite dans les demandes de brevet internationales WO2015/086979 et WO2016/071648 de la demanderesse, et qui consiste à faire passer le flux gazeux directement à travers un volume du liquide contenu dans une enceinte, en injectant le flux gazeux dans le volume de liquide, au-dessous de la surface de ce volume de liquide. Cette solution technique présente notamment l'avantage de permettre d'atteindre des rendements énergétiques importants pour l'échange thermique entre le liquide et le gaz en utilisant la conductivité thermique et la chaleur latente du liquide. Elle présente toutefois l'inconvénient de nécessiter la mise en oeuvre de ventilateurs ou compresseurs de forte puissance pour l'injection du flux gazeux dans le volume de liquide à cause de la perte de charge importante occasionnée par ce volume de liquide sur le parcours du flux gazeux.

Une deuxième solution technique consiste à faire passer le flux gazeux à travers un rideau de fines gouttelettes du liquide ou à travers une surface d'échange perméable au gaz et contenant ce liquide, tel que par exemple un matériau textile imbibé d'eau. Le principal inconvénient de ce type de solution réside dans le très faible rendement énergétique de l'échange thermique entre le liquide et le flux gazeux, ce qui oblige de manière préjudiciable à mettre en oeuvre des surfaces d'échange très importantes et encombrantes. Il en est de même pour les applications de filtrage du gaz, qui nécessitent la mise en oeuvre de surfaces de contact entre le gaz et le liquide très importantes et encombrantes.

Une troisième solution technique connue consiste à faire circuler dans une enceinte d'échange verticale de type tour, à contresens et au contact l'un de l'autre, un flux gazeux ascendant et un flux de liquide descendant par gravité dans l'enceinte. Cette troisième solution technique présente l'avantage de nécessiter la mise en oeuvre, pour la circulation forcée du flux gazeux ascendant, de ventilateurs ou compresseurs qui sont généralement de plus faible puissance que pour la première solution susvisée, car la perte de charge sur le parcours du flux gazeux est faible. En revanche, comme pour la deuxième solution susvisée, le rendement énergétique de l'échange thermique entre le liquide et le gaz est plus faible que pour la première solution, ce qui en pratique oblige à mettre en oeuvre des enceintes d'échange de très grande hauteur pour augmenter suffisamment la durée de mise en contact du gaz et du liquide. Il en est de même avec cette troisième solution pour les applications de filtrage du gaz au moyen du liquide.

Le document WO 98/41315 A1 divulgue un dispositif selon le préambule de la revendication 1.

### Objectif de l'invention

La présente invention vise à proposer une nouvelle solution technique de mise en contact d'un gaz et d'un liquide.

Plus particulièrement, cette nouvelle solution technique permet d'améliorer l'efficacité de la mise en contact du gaz et du liquide par rapport aux deuxième et troisième solutions susvisées.

Plus particulièrement, cette nouvelle solution technique permet d'obtenir une perte de charge sur le parcours du flux gazeux qui peut être moins importante que la première solution technique susvisée.

### Résumé de l'invention

L'invention ainsi pour objet un dispositif de mise en contact d'un gaz et d'un liquide, selon la revendication 1.

Dans le cadre de l'invention, les sens de circulation du flux de gaz et du flux de liquide étant les mêmes, l'invention peut avantageusement être facilement mise en oeuvre avec des pressions de travail extrêmement variées, et à la différence des solutions susvisées de l'art antérieur, peut avantageusement être facilement mise en oeuvre avec notamment des pressions de travail hautes supérieures à la pression atmosphérique.

Plus particulièrement, le dispositif de l'invention peut comporter les caractéristiques additionnelles et optionnelles suivantes, prises isolément, ou en combinaison les unes avec les autres :
- les moyens de brassage comportent plusieurs éléments de brassage qui sont espacés dans la direction verticale, et de préférence qui sont également espacés dans la direction horizontale.
- ladite première partie de l'enceinte comporte un axe central et le bord libre de chaque élément de brassage est positionné sensiblement au niveau ou à proximité de cet axe central.
- les moyens de brassage comportent à l'intérieur de l'enceinte au moins un organe de brassage rotatif, qui permet lorsqu'il est mis en rotation de faire remonter localement et/ou de dévier localement vers le haut une partie au moins du flux de gaz et du flux de liquide, de manière à créer localement des turbulences dans le flux de gaz et dans le flux de liquide.
- ledit organe de brassage rotatif comporte un tambour rotatif à l'intérieur duquel peuvent circuler le flux de gaz et le flux de liquide et qui est équipé de pales internes.
- ledit tambour rotatif est orienté sensiblement verticalement ou est incliné vers bas dans le sens de circulation du flux de gaz et du flux liquide.
- les pales internes sont espacées verticalement et horizontalement et chaque pale interne s'étend depuis la paroi du tambour de préférence jusque sensiblement l'axe central du tambour rotatif.
- chaque pale interne est inclinée vers le bas.
- les pales internes sont espacées verticalement et chaque pale interne comprend une plaque dans laquelle est ménagée une ouverture permettant le passage du flux de gaz et du flux de liquide à travers la paroi, chaque ouverture étant de préférence décalée dans la direction horizontale par rapport à l'ouverture de la plaque sous-jacente, de manière à créer à travers les plaques un chemin plus tortueux pour le flux de gaz et le flux de liquide.
- ledit tambour rotatif est orienté sensiblement horizontalement et les pales internes sont radiales.
- l'admission du flux de liquide dans l'enceinte comporte un conduit d'admission comportant à l'extérieur de l'enceinte une ouverture d'admission dudit flux de liquide et à l'intérieur de l'enceinte une ouverture pour l'introduction dans l'enceinte du flux de liquide.
- les moyens de brassage sont sensiblement centrés sur un axe et ladite ouverture pour l'introduction dans l'enceinte du flux de liquide est positionnée sensiblement au niveau ou à proximité de cet axe.
- le conduit d'admission est incliné par rapport à l'axe central d'un angle sensiblement égal à 45°.
- l'ouverture du conduit d'admission pour l'introduction dans l'enceinte du flux de liquide descendant est positionnée au regard de l'élément de brassage le plus haut.
- l'élément de brassage le plus haut présentant une surface supérieure courbe concave dont la courbure permet de dévier localement vers le haut une partie au moins du flux de gaz descendant et du flux de liquide descendant, de manière à créer localement des turbulences dans le flux de gaz descendant et dans le flux de liquide descendant, l'ouverture du conduit d'admission pour l'introduction dans l'enceinte du flux de liquide descendant est positionnée au regard de cette face supérieure courbe de l'élément de brassage le plus haut de telle sorte que le flux de liquide en sortie du conduit d'admission est dirigé en direction de cette face supérieure courbe.
- les premiers moyens d'introduction et de mise en circulation dans ladite enceinte du flux de gaz comportent un ventilateur ou compresseur qui est raccordé à l'enceinte et qui permet d'introduire et de faire circuler de manière forcée un flux de gaz à l'intérieur de l'enceinte, de préférence avec un débit réglable.
- les deuxièmes moyens d'introduction et de mise en circulation dans ladite enceinte du flux de liquide comportent une pompe qui est raccordée à l'enceinte et qui permet d'introduire un flux de liquide à l'intérieur de l'enceinte, de préférence avec un débit réglable.
- l'enceinte comporte, en aval des moyens de brassage, une partie horizontale à l'intérieur de laquelle est fixée, au moins une paroi interne verticale inférieure qui comprend un bord supérieur libre espacé d'une paroi de cette partie horizontale de l'enceinte, de manière à ménager, entre cette paroi et ledit bord supérieur libre, un passage pour le gaz et le liquide.
- le dispositif comporte, à l'intérieur de la partie horizontale de l'enceinte, au moins une paroi interne supérieure, qui comporte un bord inférieur libre espacé d'une paroi de la partie horizontale de l'enceinte, de manière à ménager un passage entre cette paroi et ledit bord inférieur libre et à forcer le gaz à se mélanger avec le liquide lors de son passage dans la partie horizontale de l'enceinte.
- le bord inférieur libre de la paroi interne supérieure est positionné sensiblement au même niveau ou à un niveau inférieur à celui du bord supérieur libre de la paroi interne verticale inférieure.

L'invention a pour autre objet un procédé de mise en contact d'un gaz et d'un liquide au moyen du dispositif susvisé, dans lequel on introduit, de préférence de manière continue, dans l'enceinte verticale en amont des moyens de brassage un flux dudit gaz et un flux dudit liquide.

L'invention a pour autre objet une utilisation du dispositif susvisé pour mettre en contact un gaz et un liquide.

### Brève description des figures

Les caractéristiques et avantages de l'invention apparaîtront plus clairement à la lecture de la description détaillée ci-après de plusieurs variantes particulières de réalisation de l'invention, lesquelles variantes particulières de réalisation sont décrites à titre d'exemples non limitatifs et non exhaustifs de l'invention, et en référence aux dessins annexés sur lesquels :
- La figure 1 est une vue en perspective isométrique d'une première variante de réalisation d'un dispositif de l'invention ;
- La figure 2 est une vue de côté du dispositif de la figure 1 ;
- La figure 3 est une vue en coupe transversale dans un plan vertical central du dispositif de la figure 1, dont l'enceinte verticale est raccordée à un ventilateur (ou compresseur) et à une pompe, et qui est en cours de fonctionnement ;
- La figure 4 est une vue en coupe transversale dans un plan vertical d'une deuxième variante de réalisation d'un dispositif alternatif.
- La figure 5 est une vue en coupe transversale de ladite deuxième variante de réalisation dans le plan de coupe horizontal V-V de la figure 4 ;
- La figure 6 est une vue en coupe transversale dans un plan vertical d'une troisième variante de réalisation d'un dispositif alternatif.
- La figure 7 est une vue en coupe transversale de ladite troisième variante de réalisation dans le plan de coupe horizontal VII-VII de la figure 6 ;
- La figure 8 est une vue en coupe transversale dans un plan vertical d'une deuxième variante de réalisation d'un dispositif alternatif.
- La figure 9 est une vue en coupe transversale de ladite deuxième variante de réalisation dans le plan de coupe horizontal IX-IX de la figure 8.

### Description détaillée

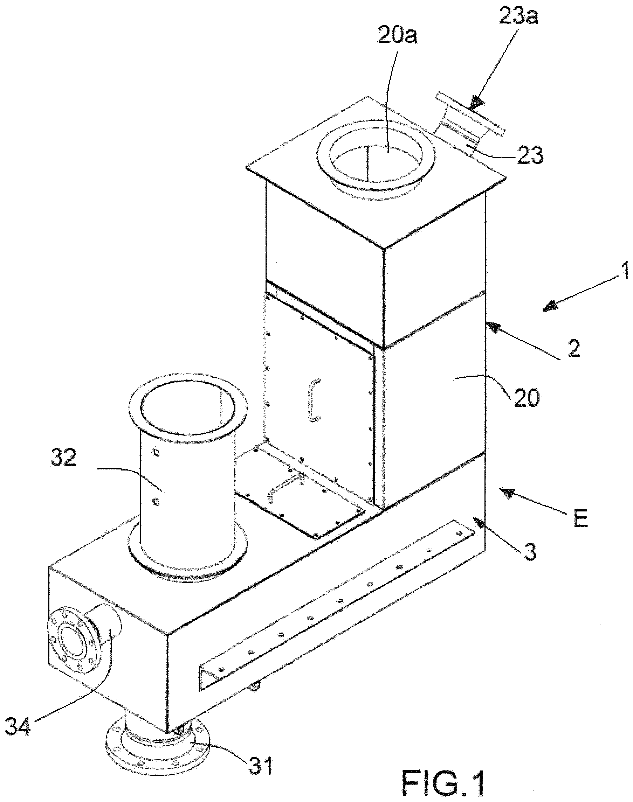

On a représenté sur les figures 1 à 3 une variante de réalisation d'un dispositif 1 de l'invention permettant de mettre en contact un flux gazeux G et un flux de liquide L circulant dans le même sens.

Ce dispositif 1 comporte une enceinte E, qui dans cet exemple particulier et de manière non limitative de l'invention, comporte une première partie verticale 2 d'axe vertical central 2a et de hauteur H, qui communique en partie basse avec une deuxième partie 3 horizontale de longueur L.

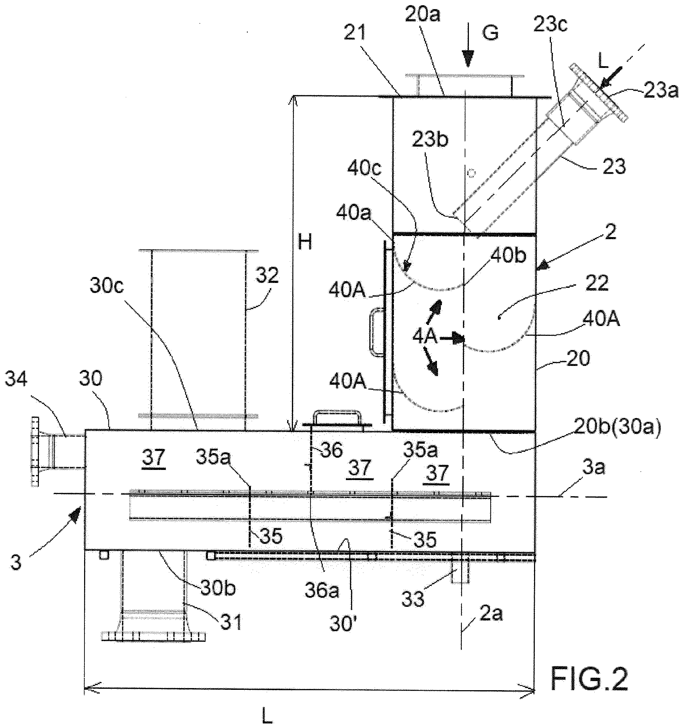

En référence à la figure 2, cette première partie 2 de l'enceinte E comporte une paroi latérale 20, qui délimite un passage interne 22 vertical pour l'écoulement du flux gazeux descendant G et du flux de liquide descendant L, et une paroi supérieure 21 dans laquelle est ménagée une ouverture 20a d'admission dans l'enceinte 2 d'un flux gazeux descendant G, qui est de préférence orienté sensiblement verticalement à l'entrée de l'enceinte 2.

L'enceinte 2 comporte en partie basse une ouverture inférieure 20b qui permet de la faire communiquer avec l'enceinte horizontale 3.

Dans la variante des figures 1 à 3, cette première partie verticale 2 de l'enceinte E forme une tour ayant dans un plan horizontal une section transversale quadrangulaire, et en l'espèce une section transversale de forme carrée, étant précisé que la géométrie de cette section transversale de cette première partie verticale 2 est sans importance pour l'invention. Dans une autre variante, cette première partie verticale 2 peut par exemple présenter dans un plan horizontal une section transversale de forme circulaire.

La première partie verticale 2 de l'enceinte E est équipée d'un conduit d'admission 23, d'axe central 23c qui passe à travers la paroi latérale 20 de l'enceinte 2.

Ce conduit d'admission 23 comporte, à l'extérieur de l'enceinte E, une ouverture d'admission 23a d'un flux de liquide descendant L et à l'intérieur de la première partie verticale 2 de l'enceinte E une ouverture 23b pour l'introduction dans l'enceinte 2 du flux de liquide descendant L.

De préférence, mais de manière non limitative de l'invention, l'axe 23c du conduit est incliné par rapport à la verticale d'un angle sensiblement égal à 45° ; l'ouverture 23b pour l'introduction dans l'enceinte 2 du flux de liquide descendant L est positionnée sensiblement au niveau ou à proximité de l'axe vertical central 2a de la première partie verticale 2 de l'enceinte E.

L'enceinte E est également équipée de moyens de brassage 4A statiques, qui sont positionnés à l'intérieur de la première partie verticale 2 de l'enceinte E, sur le parcours du flux de gaz descendant G et du flux de liquide descendant L, en aval de l'ouverture 20a d'admission de gaz et de l'ouverture 23b d'admission de liquide.

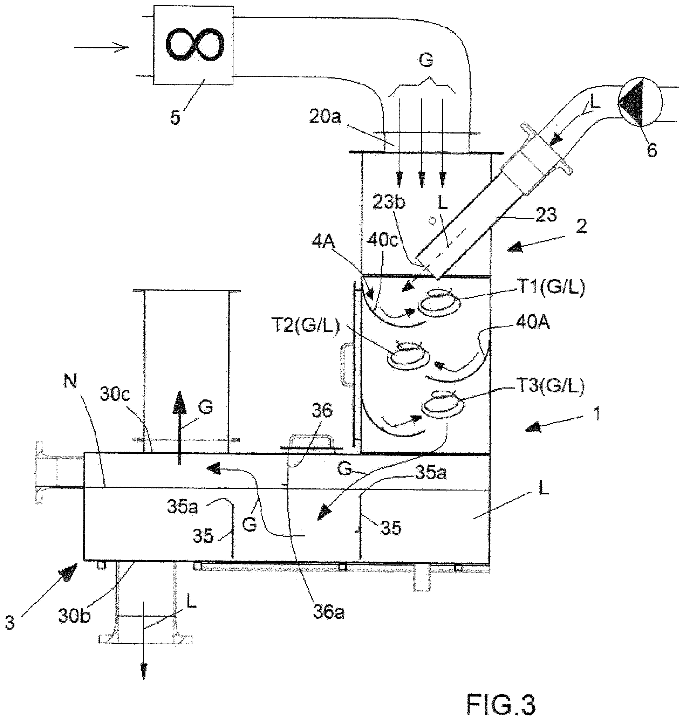

Dans cet exemple particulier de réalisation, ces moyens de brassage 4A comportent des éléments de brassage 40A, sous la forme de plaques courbes, qui sont fixées à la paroi latérale 20 de la première partie verticale 2 de l'enceinte E. Chaque plaque 40A présente une courbure, en l'espèce et de manière non limitative de l'invention en forme d'arc de cercle, qui permet de dévier localement vers le haut une partie au moins du flux de gaz descendant et du flux de liquide descendant, de manière à créer localement des turbulences T1, T2, T3 (figure 3) dans le flux de gaz descendant et dans le flux de liquide descendant, tout en laissant passer vers le bas le flux de gaz descendant et le flux de liquide descendant.

Plus particulièrement chaque plaque courbe 40A comporte une face supérieure 40c concave. Chaque plaque courbe 40A est fixée au niveau de l'un 40a de ses bords à la paroi latérale 20 de la première partie verticale 2 de l'enceinte E, et présente un bord libre 40b, à l'opposé de la paroi 20, qui est situé à un niveau inférieur au bord 40a de fixation de la plaque 40A , mais à un niveau légèrement supérieur au point le plus bas de la face supérieure courbe 40c de la plaque 40A.

Ce bord libre 40b est espacé de la paroi latérale de la première partie verticale 2 de l'enceinte E, ce qui permet de ménager entre ce bord libre et ladite paroi latérale, un espace permettant le passage vers le bas du flux de gaz descendant et du flux de liquide descendant.

De préférence, mais de manière non limitative de l'invention, le bord libre 40b de chaque plaque 40A est positionné sensiblement au niveau ou à proximité de l'axe vertical central 2a de la première partie verticale 2 de l'enceinte E.

Les plaque courbes 40A sont fixées à l'intérieur de la première partie verticale 2 de l'enceinte E, en étant espacées l'une de l'autre dans la direction verticale et de préférence en étant espacées l'une de l'autre dans la direction horizontale, plus préférentiellement et tel qu'illustré sur les figures 2 et 3 en étant en opposition l'une de l'autre.

Dans l'exemple particulier de réalisation de la figure 2, le dispositif comporte trois plaques 40A successives, étant précisé que dans le cadre de l'invention le dispositif peut comporter un nombre de plaques 40A plus important ou moins important.

En référence à la figure 2, l'ouverture 23b du conduit d'admission 23 est positionnée au regard de la face supérieure 40c de la première plaque 40A la plus haute, de telle sorte que le flux de liquide L en sortie du conduit d'admission 23 est dirigé en direction de la face supérieure 40c de cette première plaque 40 la plus haute.

Dans une variante de réalisation moins performante, le dispositif pourrait comporter uniquement cette première plaque 40A la plus haute.

La deuxième partie horizontale 3 de l'enceinte E, d'axe central horizontal 3a, comporte une paroi supérieure 30 dans laquelle est ménagée une ouverture 30a qui coïncide avec l'ouverture basse 20b de de la première partie verticale 2 de l'enceinte E, et qui permet de faire communiquer les deux parties 2 et 3 entre elles.

Dans sa partie extrême la plus éloignée de de la première partie verticale 2 de l'enceinte E, la deuxième partie horizontale 3 de l'enceinte E comporte une ouverture d'évacuation inferieure 30b pour l'évacuation au moins par gravité du liquide en sortie de l'enceinte E et une ouverture d'évacuation supérieure 30c pour l'évacuation du gaz en sortie de l'enceinte E. L'ouverture d'évacuation de liquide 30b communique avec un conduit d'évacuation vertical inférieur 31 et l'ouverture d'évacuation de gaz 30c communique avec un conduit d'évacuation vertical supérieur 32.

La deuxième partie horizontale 3 de l'enceinte E comporte en outre une ouverture de vidange manuelle 33, qui pendant le fonctionnement du dispositif 1 est obturée temporairement au moyen d'un bouchon amovible, et qui peut être ouverte pour réaliser une vidange manuelle par gravité du liquide restant dans le dispositif 1 en fin de fonctionnement.

La deuxième partie horizontale 3 de l'enceinte E comporte également en partie supérieure une conduite d'évacuation 34 qui permet de contrôler le niveau de liquide dans l'enceinte horizontale 3, et le cas échéant d'évacuer un surplus de liquide lorsque le niveau de liquide dans la deuxième partie horizontale 3 de l'enceinte E est trop haut.

Le dispositif comporte à l'intérieur de la deuxième partie horizontale 3 de l'enceinte E deux parois internes verticales inférieures 35, qui sont espacées dans la direction horizontale, et qui délimitent trois chambres internes successives 37 le long de la deuxième partie horizontale 3 de l'enceinte E. Le bord supérieur libre 35a de chaque paroi interne verticale inférieure 35 est espacé de la paroi supérieure 30 de la deuxième partie horizontale 3 de l'enceinte E, de manière à ménager entre cette paroi supérieure 30 et ledit bord supérieur libre 35a un passage permettant de faire communiquer entre elles deux chambres voisines 37.

Afin de forcer le gaz à se mélanger avec le liquide lors de son passage dans l'enceinte horizontale 3 et éviter une séparation prématurée du gaz et du liquide dans la partie amont de la deuxième partie horizontale 3 de l'enceinte E dans la région de la première partie verticale 2 de l'enceinte E, , le dispositif comporte également une paroi interne supérieure 36, qui est positionnée entre les deux parois internes verticales inférieures 35. Le bord inférieur libre 36a de cette paroi interne verticale supérieure 36 est espacé de la paroi inférieure 30' de la deuxième partie horizontale 3 de l'enceinte E, de manière à ménager un passage entre cette paroi inférieure 30' et ledit bord inférieur 36a.

Le bord inférieur libre 36a de cette paroi interne verticale supérieure 36 est de préférence situé au-dessous du niveau des bords supérieurs libres 35a des parois internes verticales inférieures 35.

En référence à la figure 3, en fonctionnement, l'ouverture d'admission 20a de l'enceinte E est raccordée à un compresseur ou ventilateur 5 (figure 3) qui permet d'introduire un flux de gaz G, en amont des moyens de brassage 4A, de manière continue et de préférence avec un débit réglable, et qui permet de faire circuler ledit flux de gaz à l'intérieur de l'enceinte E entre l'ouverture d'admission de gaz 20a et l'ouverture d'évacuation de gaz 30c , G,.

Le conduit d'admission 23 est raccordé à une pompe 6, qui permet d'introduire de manière continue, en amont des moyens de brassage 4A, un flux de liquide descendant L à l'intérieur de l'enceinte E, de préférence avec un débit réglable. Cette pompe 6 permet de faire circuler ledit flux de liquide L dans le même sens de circulation que le flux de gaz G, entre l'ouverture d'admission de liquide 3b et l'ouverture d'évacuation de liquide 30b.

Initialement, la deuxième partie horizontale 3 de l'enceinte E est préalablement remplie avec un niveau de liquide N (figure 3), qui est de préférence situé au-dessus du bord supérieur 35a des parois internes verticales inférieures 35, lesquelles parois internes verticales inférieures 35 sont ainsi complètement immergées dans le liquide contenu dans la deuxième partie horizontale 3 de l'enceinte E. La paroi interne verticale supérieure 36 est en partie immergée dans le liquide contenu dans la deuxième partie horizontale 3 de l'enceinte E, le bord inférieur 36a de cette paroi interne verticale supérieure 36 étant immergé sous le niveau N de liquide.

En fonctionnement, le ventilateur ou compresseur 5 et la pompe 6 étant en marche, en sortie 23b du conduit d'admission 23, un flux de liquide L descendant est projeté contre la face supérieure courbe 40c de la première plaque 40A la plus haute et est au moins en partie dévié vers la haut. Une partie au moins du flux gazeux G descendant au contact de cette première plaque 40A la plus haute est également déviée localement vers le haut. Il en résulte la formation localement au niveau de cette première plaque 40A la plus haute d'une turbulence T1 qui permet avantageusement un brassage et un mélange plus intime du gaz et du liquide.

Le flux de liquide s'écoulant vers le bas par gravité dans la première partie verticale 2 de l'enceinte E et le flux gazeux étant forcé à descendre à l'intérieur de la première partie verticale 2 de l'enceinte E par le ventilateur ou compresseur 5, le flux gazeux et le flux de liquide descendent dans l'enceinte jusqu'à la plaque courbe suivante 40A, et les mêmes phénomènes de déviation vers le haut du gaz et du liquide avec formation de turbulences T2, T3 se produisent au niveau des autres plaques courbes 40A.

On obtient ainsi en sortie de la première partie verticale 2 de l'enceinte E un premier mélange intime du flux gazeux G et du flux de liquide L. La présence sur le trajet des flux de gaz et de liquide des plaques courbes 40A créant les turbulences T1, T2, T3 permet avantageusement d'améliorer l'efficacité de ce mélange et ainsi de réduire la hauteur H de la première partie verticale 2 de l'enceinte E. En outre la perte de charge créée sur le parcours du flux de gaz G par les plaques courbes 40A est faible, ce qui permet d'éviter un surdimensionnement du ventilateur ou compresseur 5.

Après leur passage dans la première partie verticale de l'enceinte E, le flux de liquide et le flux de gaz descendent dans la deuxième partie horizontale 3 de l'enceinte E en passant à travers les ouvertures 20b, 30a.

En fonctionnement le liquide s'écoule dans l'enceinte horizontale 3 jusqu'à l'ouverture d'évacuation de liquide 30b, ce qui renouvelle continuellement le liquide contenu dans l'enceinte ; la paroi interne verticale supérieure 36 fait obstacle au passage de gaz et contraint le flux de gaz à passer dans le volume de liquide contenu dans la deuxième partie horizontale 3 de l'enceinte E, ce qui permet d'obtenir une mise en contact supplémentaire du gaz et du liquide.

La séparation du gaz et du liquide s'opère dans la partie extrême aval de la deuxième partie horizontale 3 de l'enceinte E à l'opposé de la première partie verticale 2 l'enceinte E, le flux de gaz après contact avec liquide étant évacué de l'enceinte E par l'ouverture d'évacuation supérieure 30c et le liquide étant évacué de l'enceinte E par l'ouverture d'évacuation inférieure 30b.

Dans une autre variante de réalisation de l'invention le dispositif pourrait ne comporter qu'une partie verticale 2 et être dépourvu de partie horizontale 3, l'ouverture d'évacuation de gaz et l'ouverture d'évacuation de liquide étant dans ce cas par exemple ménagées dans ladite partie verticale 2.

Les plaques 40A peuvent être remplacées par tout moyen de brassage équivalent remplissant la fonction de dévier localement vers le haut et/ou de faire remonter localement une partie au moins du flux de gaz descendant et du flux de liquide descendant, de manière à créer localement des turbulences dans le flux de gaz descendant et dans le flux de liquide descendant, tout en permettant le passage vers le bas du flux de gaz descendant et du flux de liquide descendant.

Par exemple et de manière non exhaustive, les moyens de brassage peuvent comporter des roues à pales qui sont positionnées à l'intérieur de l'enceinte, sur le parcours du flux de gaz descendant et du flux de liquide descendant, et qui sont aptes, lorsqu'elles sont mises en rotation, à faire remonter localement une partie au moins du flux de gaz descendant et du flux de liquide descendant, de manière à créer localement des turbulences dans le flux de gaz descendant et dans le flux de liquide descendant. Ces roues à pales ou équivalent peuvent également être combinées avec des plaques courbes 40A.

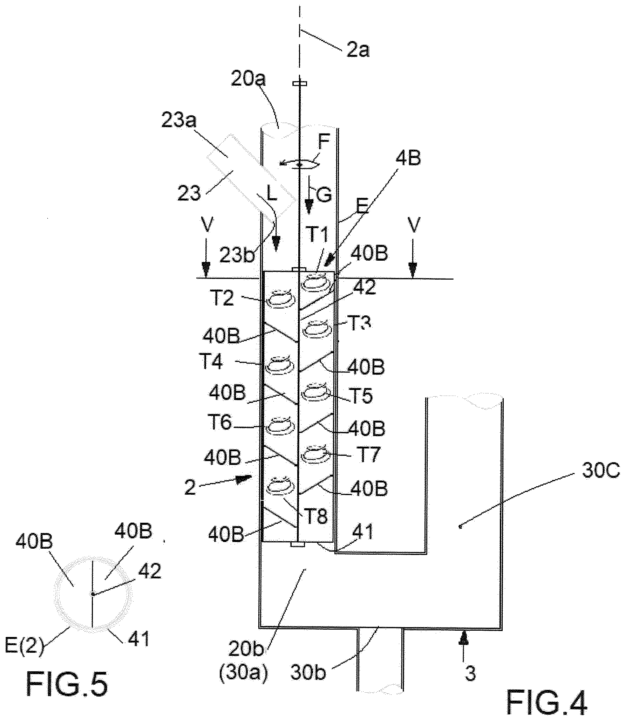

### Variante des figures 4 et 5

Dans la variante de réalisation des figures 4 et 5, les moyens de brassage 4B sont rotatifs. Ils comportent un tambour rotatif 40, à l'intérieur duquel peut circuler le flux de gaz G et le flux de liquide L, et qui est équipé de pales internes 40B inclinées vers le bas. Ce tambour 41 est monté coaxialement à l'intérieur de la partie verticale 2 de l'enceinte E, en étant fixé à un arbre vertical central 42. Les moyens de brassage 4B comptent également des moyens de motorisation qui permettent de mettre en rotation sur lui-même l'arbre 42, et ainsi de de mettre en rotation le tambour 41 autour d'un axe central vertical confondu avec l'axe central vertical 2a de la partie verticale 2 de l'enceinte E.

De préférence tel qu'illustré, chaque pale interne 40B est une paroi plane demi-cylindrique, qui s'étend depuis la paroi interne cylindrique du tambour 41 jusque sensiblement l'arbre rotatif central 42 et qui plus particulièrement est inclinée vers le bas.

Plus particulièrement, les pales internes 40B sont espacées verticalement et horizontalement.

En fonctionnement, le tambour rotatif 41 équipé des pales internes 40B est entraîné en rotation (Figure 4, flèche F) par les moyens de motorisation des moyens de brassage 4B à une vitesse contrôlée et le flux de liquide et le flux de gaz descendant sont introduits dans l'enceinte E en amont des moyens de brassage 4B grâce à la mise en oeuvre d'un ventilateur ou compresseur (non représenté sur les figures 4 et 5 ) et d'une pompe (non représentée sur les figures 4 et 5 ) de manière identique à la variante des figures 1 à 3 précédemment décrite.

Le flux de liquide L descendant et le flux de gaz G descendant circulent dans le même sens vers le bas au contact successivement des pales internes rotatives 40B. Sous l'effet de leur rotation, chaque pale interne 40B rotative fait remonter localement une partie au moins du flux de gaz et du flux de liquide, de manière à créer localement des turbulences successives T1 à T8 dans le flux de gaz et dans le flux de liquide.

On obtient ainsi en sortie de la partie verticale 2 de l'enceinte E un mélange intime du flux gazeux G et du flux de liquide L. La présence sur le trajet des flux de gaz et de liquide des pales internes rotatives 40B créant les turbulences T1 à T8 permet avantageusement d'améliorer l'efficacité de ce mélange et ainsi de réduire la hauteur de la partie verticale 2 de l'enceinte E. En outre la perte de charge créée sur le parcours du flux de gaz G par les pales internes rotative 40B est faible, ce qui permet d'éviter un surdimensionnement du ventilateur ou compresseur.

Après leur passage dans la première partie verticale de l'enceinte E, le flux de liquide L et le flux de gaz G descendent dans la deuxième partie horizontale 3 de l'enceinte E et sont évacués respectivement par les ouvertures d'évacuation 30b et 30c.

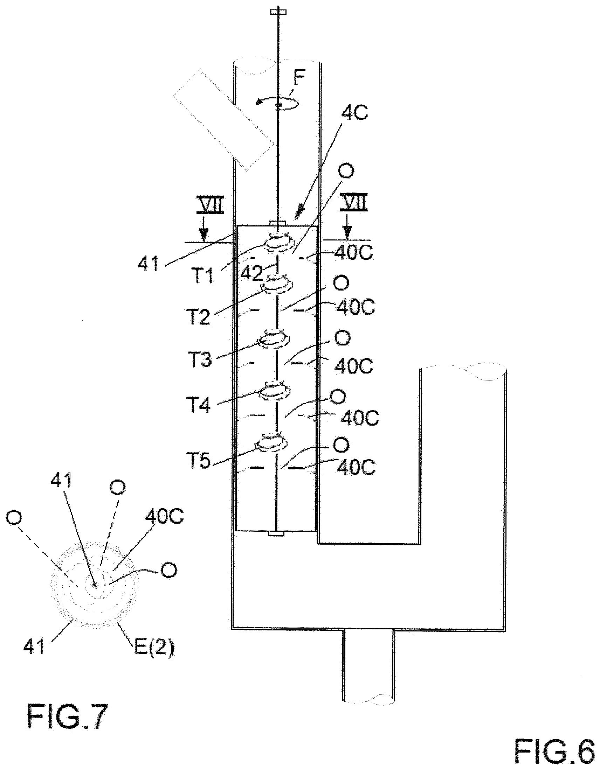

### Variante des figures 6 et 7

La variante des figures 6 et 7 se différencie de la variante des figures 4 et 5 en ce qu'on a remplacé les pales internes inclinées 40B par des plaques circulaires 40C. Dans chaque plaque 40B circulaire est ménagée une ouverture O pour le passage du flux de liquide L et du flux de gaz G à travers la plaque 40C. Les plaque 40C sont espacées verticalement et l'arbre rotatif 42 du tambour 41 est passé à travers les ouvertes O de ces plaques. De préférence, tel illustré, les ouvertures O ne sont pas alignées dans la direction de l'axe central de rotation du tambour 41 (c'est-à-dire la direction verticale dans le cas des figures 6 et 7) mais chaque ouverture O est décalée dans la direction horizontale par rapport à l'ouverture de la plaque 40C sous-jacente, de manière à créer à travers les plaques 40C un chemin plus tortueux pour le flux de gaz et de flux de liquide.

En fonctionnement, et de manière comparable à la variante des figures 4 et 5, le tambour rotatif 41 équipé des plaques 40C est entraîné en rotation ( Figure 6, flèche F) par les moyens de motorisation des moyens de brassage 4C à une vitesse contrôlée et le flux de liquide et le flux de gaz descendant sont introduits dans l'enceinte E en amont des moyens de brassage 4C grâce à la mise en oeuvre d'un ventilateur ou compresseur (non représenté sur les figures 6 et 7) et d'une pompe (non représentée sur les figures 6 et 7)

Le flux de liquide L descendant et le flux de gaz G descendant circulent dans le même sens vers le bas au contact successivement des plaques internes rotatives 40C. Sous l'effet de leur rotation, chaque plaque interne 40C rotative fait remonter localement une partie au moins du flux de gaz et du flux de liquide, de manière à créer localement des turbulences successives T1 à T5 dans le flux de gaz et dans le flux de liquide. On obtient ainsi en sortie de la partie verticale 2 de l'enceinte E un mélange intime du flux gazeux G et du flux de liquide L

Les variantes précédemment décrites des figures 1 à 6 peuvent également être modifiées de telle sorte que la première partie 2 de l'enceinte E, et le cas échéant le tambour rotatif 41 équipés de pales ou plaque internes ne sont pas orientés strictement verticalement mais peuvent être inclinés vers bas dans le sens de circulation du flux de gaz et du flux liquide.

La deuxième variante des figures 4 et 5 et la troisième variante des figures 6 et 7 peuvent égalent être modifiées de telle sorte que la partie horizontale 3 de l'enceinte E de ces variantes soient équipées des mêmes plaques 35 et 36 que la première variante des figures 1 à 3.

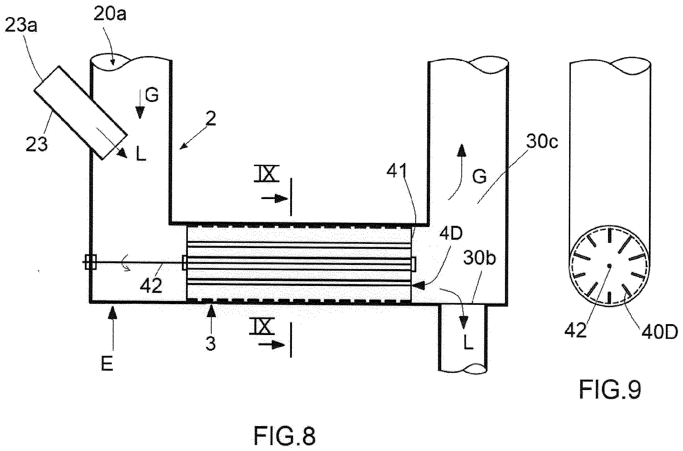

### Variante des figures 8 et 9

Dans la variante des figures 8 et 9, les moyens de brassage 4D comportent un tambour rotatif 41 qui, à la différence des variantes des figures 4 à 7, est positionné dans la partie horizontale 3 de l'enceinte E et est orienté sensiblement horizontalement. Ce tambour 41 est équipé de pales internes 40D qui sont fixées à la paroi interne du tambour, qui sont orientées radialement dans le sens de leur largeur, et qui s'étendent dans le sens de leur longueur parallèlement à l'axe central de rotation du tambour.

En fonctionnement, le tambour rotatif 41 équipé des pales internes radiales 40D est entraîné en rotation par des moyens de motorisation à une vitesse contrôlée et le flux de liquide et le flux de gaz sont introduits dans l'enceinte E en amont des moyens de brassage 4D grâce à la mise en oeuvre d'un ventilateur ou compresseur (non représenté sur les figures 8 et 9) et d'une pompe (non représentée sur les figures 8 et 9)

Le flux de liquide L et le flux de gaz G circulent dans le même sens sensiblement horizontalement en traversant le tambour rotatif 41. Sous l'effet de leur rotation, les pales internes 40D fait remonter localement une partie au moins du flux de gaz et du flux de liquide à l'intérieur du tambour, de manière à créer localement des turbulences successives dans le flux de gaz et dans le flux de liquide. On obtient ainsi en sortie de la partie horizontale 3 de l'enceinte E un mélange intime du flux gazeux G et du flux de liquide L.

Le tambour rotatif peut être remplacé par tout moyen de brassage rotatif positionné à l'intérieur de l'enceinte E sur le parcours du flux de gaz G et du flux de liquide L et qui est apte à dévier localement vers le haut et/ou à faire remonter localement une partie au moins du flux de gaz et du flux de liquide, de manière à créer localement des turbulences dans le flux de gaz et dans le flux de liquide. Le tambour rotatif peut par exemple être remplacé par une vis rotative remplissant la même fonction de brassage

### Applications

Le dispositif de l'invention peut être utilisé dans tous les domaines techniques où il est utile de mettre en contact un flux de gaz G avec un flux de liquide.

Le liquide peut être de tout type et peut, par exemple mais pas nécessairement, être de l'eau ou une solution acide, neutre ou basique.

A titre d'exemples non limitatifs et non exhaustifs d'application, Le dispositif de l'invention peut par exemple être utilisé dans les applications suivantes, lesquelles applications peuvent le cas échéant être combinées :
- mise en contact d'un gaz et d'un liquide afin de réaliser un échange thermique entre le gaz et le fluide, par exemple pour refroidir le gaz (notamment des gaz de combustion, des fumées industrielles, ...) ou au contraire pour réchauffer le gaz au moyen du liquide ou inversement pour chauffer le liquide ou le refroidir au moyen du gaz.
- mise en contact d'un gaz et d'un liquide afin d'humidifier ou de déshumidifier le flux gazeux.
- mise en contact d'un gaz et d'un liquide afin de dépolluer ou filtrer le flux gazeux, notamment en piégeant dans le liquide certains polluants ou certaines molécules du gaz, tels que par exemple des poussières, des polluants de type NOx (oxydes d'azotes), SO₂, CO₂, chlore ou dérivés chlorés,...
- condensation de vapeurs ou de buée en utilisant un liquide plus froid que le gaz.

## Revendications

1. Dispositif (1) de mise en contact d'un gaz et d'un liquide, comportant une enceinte (E), des premiers moyens (5) d'introduction et de mise en circulation dans ladite enceinte d'un flux de gaz (G), des deuxièmes moyens (6) d'introduction et de mise en circulation dans ladite enceinte d'un flux de liquide (L) circulant à l'intérieur de l' enceinte (E) dans la même direction que le flux de gaz (G), ladite enceinte (E) comportant au moins une première partie (2) dans laquelle le flux de gaz (G) et le flux de liquide (L) sont descendants, ledit dispositif comportant des moyens de brassage (4A ;4B ; 4C ; 4D) du flux de gaz (G) et du flux de liquide (L), qui sont positionnés à l'intérieur de ladite première partie (2) de l'enceinte (E) sur le parcours du flux de gaz et du flux de liquide, qui sont aptes à dévier localement vers le haut et/ou à faire remonter localement une partie au moins du flux de gaz et du flux de liquide, de manière à créer localement des turbulences dans le flux de gaz et dans le flux de liquide, et qui comportent au moins un élément de brassage (40A) statique, lequel élément de brassage (40A) présente une surface supérieure (40c) courbe concave dont la courbure permet de dévier localement vers le haut une partie au moins du flux de gaz descendant et du flux de liquide descendant, de manière à créer localement des turbulences dans le flux de gaz descendant et dans le flux de liquide descendant, **caractérise en ce que** chaque élément de brassage (40) est fixé à l'intérieur de ladite première partie (2) de l'enceinte (E) au niveau de l'un (40a) de ses bords et comporte à l'opposé de ce bord de fixation (40a) un bord libre (40b) qui est situé à un niveau inférieur au bord (40a) de fixation de l'élément de brassage (40A), mais à un niveau supérieure au point le plus bas de la face supérieure courbe (40c) de l'élément de brassage (40A).

2. Dispositif selon la revendication 1, dans lequel les moyens de brassage (4A) comportent plusieurs éléments de brassage (40A) qui sont espacés dans la direction verticale, et de préférence qui sont également espacés dans la direction horizontale.

3. Dispositif selon la revendication 1 ou 2, dans lequel ladite première partie (2) de l'enceinte comporte un axe central (2a) et le bord libre (40b) de chaque élément de brassage (40A) est positionné sensiblement au niveau ou à proximité de cet axe central (2a).

4. Dispositif selon l'une quelconque des revendications précédentes, dans lequel l'admission du flux de liquide (L) dans l'enceinte comporte un conduit d'admission (23) comportant à l'extérieur de l'enceinte (E) une ouverture d'admission (23a) dudit flux de liquide (L) et à l'intérieur de l'enceinte (E) une ouverture (23b) pour l'introduction dans l'enceinte (E ) du flux de liquide (L).

5. Dispositif selon la revendication 4, dans lequel les moyens de brassage (4A ; 4B ; 4C) sont sensiblement centrés sur un axe (2a) et ladite ouverture (23b) pour l'introduction dans l'enceinte (2) du flux de liquide (L) est positionnée sensiblement au niveau ou à proximité de cet axe (2a).

6. Dispositif selon l'une quelconque des revendications 4 ou 5, dans lequel le conduit d'admission (23) est incliné par rapport à l'axe central (2a) d'un angle sensiblement égal à 45°.

7. Dispositif selon la revendication 4 et l'une quelconque des revendications 1 à 3, dans lequel l'ouverture (23b) du conduit d'admission (23) pour l'introduction dans l'enceinte (E) du flux de liquide descendant (L) est positionnée au regard de l'élément de brassage (40A) le plus haut.

8. Dispositif selon la revendication 7, dans lequel l'élément de brassage (40A) le plus haut présentant une surface supérieure (40c) courbe concave dont la courbure permet de dévier localement vers le haut une partie au moins du flux de gaz descendant et du flux de liquide descendant, de manière à créer localement des turbulences dans le flux de gaz descendant et dans le flux de liquide descendant, l'ouverture (23b) du conduit d'admission (23) pour l'introduction dans l'enceinte (E) du flux de liquide descendant (L) est positionnée au regard de cette face supérieure courbe (40c) de l'élément de brassage (40A) le plus haut de telle sorte que le flux de liquide (L) en sortie du conduit d'admission (23) est dirigé en direction de cette face supérieure (40c) courbe.

9. Dispositif selon l'une quelconque des revendications précédentes, dans lequel les premiers moyens d'introduction et de mise en circulation dans ladite enceinte du flux de gaz (G) comportent un ventilateur ou compresseur (5) qui est raccordé à l'enceinte (E) et qui permet d'introduire et de faire circuler de manière forcée un flux de gaz (G) à l'intérieur de l'enceinte, de préférence avec un débit réglable.

10. Dispositif selon l'une quelconque des revendications précédentes, dans lequel les deuxièmes moyens d'introduction et de mise en circulation dans ladite enceinte du flux de liquide (L) comportent une pompe (6) qui est raccordée à l'enceinte (E) et qui permet d'introduire un flux de liquide (L) à l'intérieur de l'enceinte (E), de préférence avec un débit réglable.

11. Dispositif selon l'une quelconque des revendications précédentes, dans laquelle l'enceinte comporte, en aval des moyens de brassage (4A), une partie horizontale (3) à l'intérieur de laquelle est fixée, au moins une paroi interne verticale inférieure (35) qui comprend un bord supérieur libre (35a) espacé d'une paroi (30) de cette partie horizontale (3) de l'enceinte, de manière à ménager, entre cette paroi (30) et ledit bord supérieur libre (35a), un passage pour le gaz et le liquide.

12. Dispositif selon la revendication 11, comportant, à l'intérieur de la partie horizontale (3) de l'enceinte, au moins une paroi interne supérieure (36), qui comporte un bord inférieur libre (36a) espacé d'une paroi (30') de la partie horizontale (3) de l'enceinte, de manière à ménager un passage entre cette paroi (30') et ledit bord inférieur libre (36a) et à forcer le gaz à se mélanger avec le liquide lors de son passage dans la partie horizontale (3) de l'enceinte.

13. Dispositif selon les revendications 11 et 12, dans lequel le bord inférieur libre (36a) de la paroi interne paroi interne supérieure (37) est positionné sensiblement au même niveau ou à un niveau inférieur à celui du bord supérieur libre (35a) de la paroi interne verticale inférieure (35).

14. Procédé de mise en contact d'un gaz et d'un liquide au moyen du dispositif visé à l'une quelconque des revendications précédentes, dans lequel on introduit dans l'enceinte (E) en amont des moyens de brassage (4A ; 4B ; 4C ; 4D) un flux (G) dudit gaz et un flux (L) dudit liquide.

15. Utilisation du dispositif visé à l'une quelconque des revendications 1 à 13 pour mettre en contact un gaz et un liquide.

## Patentansprüche

1. Vorrichtung (1) zum Inkontaktbringen eines Gases und einer Flüssigkeit, umfassend eine Kammer (E), erste Mittel (5) zum Einführen und Zirkulieren eines Gasstroms (G) in die/der Kammer, zweite Mittel (6) zum Einführen und Zirkulieren eines Flüssigkeitsstroms (L), der im Inneren der Kammer (E) in der gleichen Richtung wie der Gasstrom (G) zirkuliert, in die/der Kammer, wobei die Kammer (E) mindestens einen ersten Teil (2) umfasst, in dem der Gasstrom (G) und der Flüssigkeitsstrom (L) abwärts gerichtet sind, wobei die Vorrichtung Mittel zum Mischen (4A; 4B; 4C; 4D) des Gasstroms (G) und des Flüssigkeitsstroms (L) aufweist, die im Inneren des ersten Teils (2) der Kammer (E) in dem Weg des Gasstroms und des Flüssigkeitsstroms positioniert sind, und dazu ausgelegt sind, einen Teil mindestens des Gasstroms und des Flüssigkeitsstroms lokal nach oben zu leiten und/oder lokal aufwärts steigen zu lassen, um lokal Turbulenzen in dem Gasstrom und in dem Flüssigkeitsstrom zu erzeugen, und die zumindest ein statisches Mischelement (40A) aufweisen, wobei das Mischelement (40A) eine obere konkav gewölbte Oberfläche aufweist, wobei die Wölbung ermöglicht, einen Teil mindestens des abwärts gerichteten Gasstroms und des abwärts gerichteten Flüssigkeitsstroms lokal nach oben zu leiten, um lokal Turbulenzen in dem abwärts gerichteten Gasstrom und dem absteigenden Flüssigkeitsstrom zu erzeugen,
**dadurch gekennzeichnet, dass**
jedes Mischelement (40) im Inneren des ersten Teils (2) der Kammer (E) auf dem Niveau eines (40a) der Ränder davon befestigt ist und gegenüber dem Befestigungsrand (40a) einen freien Rand (40b) aufweist, der sich auf einem niedrigeren Niveau als der Befestigungsrand (40a) des Mischelements (40A) befindet, jedoch auf einem höheren Niveau als der tiefste Punkt der oberen gewölbten Fläche (40c) des Mischelements (40A).

2. Vorrichtung nach Anspruch 1, wobei die Mittel zum Mischen (4A) mehrere Mischelemente (40A) aufweisen, die in vertikaler Richtung beabstandet sind, und bevorzugt in vertikaler Richtung den gleichen Abstand voneinander aufweisen.

3. Vorrichtung nach Anspruch 1 oder 2, wobei der erste Teil (2) der Kammer eine Mittelachse (2a) aufweist und der freie Rand (40b) jedes Mischelements (40A) im Wesentlichen auf dem Niveau oder in der Nähe der Mittelachse (2a) positioniert ist.

4. Vorrichtung nach einem der vorhergehenden Ansprüche, wobei der Einlass des Flüssigkeitsstroms (L) in die Kammer eine Einlassleitung (23) aufweist, die außerhalb der Kammer (E) eine Einlassöffnung (23a) für den Flüssigkeitsstrom (L) und innerhalb der Kammer (E) eine Öffnung (23b) zum Einführen des Flüssigkeitsstroms (L) in die Kammer (E) aufweist.

5. Vorrichtung nach Anspruch 4, bei der die Mittel zum Mischen (4A; 4B; 4C) im Wesentlichen auf einer Achse (2a) zentriert sind und die Öffnung (23b) zum Einleiten des Flüssigkeitsstroms (L) in die Kammer (2) sich im Wesentlichen auf dem Niveau oder in der Nähe der Achse (2a) befindet.

6. Vorrichtung nach einem der Ansprüche 4 oder 5, bei der die Einlassleitung (23) in Bezug auf die Mittelachse (2a) um einen Winkel geneigt ist, der im Wesentlichen gleich 45° ist.

7. Vorrichtung nach Anspruch 4 und einem der Ansprüche 1 bis 3, wobei sich die Öffnung (23b) der Einlassleitung (23) zum Einführen des abwärts gerichteten Flüssigkeitsstroms (L) in die Kammer (E) zu dem obersten Mischelement (40A) weist.

8. Vorrichtung nach Anspruch 7, wobei das oberste Mischelement (40A) eine obere konkav gewölbte Oberfläche (40c) aufweist, deren Wölbung es ermöglicht, einen Teil mindestens des abwärts gerichteten Gasstroms und des abwärts gerichteten Flüssigkeitsstroms lokal nach oben zu leiten, um lokal Turbulenzen in dem abwärts gerichteten Gasstrom und dem abwärts gerichteten Flüssigkeitsstrom zu erzeugen, wobei die Öffnung (23b) der Einlassleitung (23) zum Einführen des abwärts gerichteten Flüssigkeitsstroms (L) in die Kammer (E) derart auf die obere gewölbte Fläche des obersten Mischelements (40A) weist, dass der aus der Einlassleitung (23) austretende Flüssigkeitsstrom (L) in die Richtung der oberen gewölbten Oberfläche (40c) geleitet wird.

9. Vorrichtung nach einem der vorhergehenden Ansprüche, wobei die ersten Mittel zum Einführen und Zirkulieren des Gasstroms (G) in die/der Kammer einen Ventilator oder Kompressor (5) aufweisen, der mit der Kammer (E) verbunden ist und es ermöglicht, einen Gasstrom (G) in das Innere der Kammer einzuführen und erzwungen zirkulieren zu lassen, bevorzugt mit einer regulierbaren Durchflussrate.

10. Vorrichtung nach einem der vorhergehenden Ansprüche, bei der die zweiten Mittel zum Einführen und Zirkulieren des Flüssigkeitsstroms (L) in die/der Kammer eine Pumpe (6) aufweisen, die mit der Kammer (E) verbunden ist und es ermöglicht, den Flüssigkeitsstrom in das Innere der Kammer (E) einzuführen, bevorzugt mit einer regulierbaren Durchflussrate.

11. Vorrichtung nach einem der vorhergehenden Ansprüche, wobei die Kammer unterhalb von den Mitteln zum Mischen (4A) einen horizontalen Teil (3) aufweist, in dessen Innerem mindestens eine untere vertikale Innenwand (35) befestigt ist, die einen freien obere Rand (35a) aufweist, der von einer Wand (30) des horizontalen Teils (3) der Kammer beabstandet ist, um zwischen dieser Wand (30) und dem freien oberen Rand (35a) einen Durchgang für das Gas und die Flüssigkeit zu bilden.

12. Vorrichtung nach Anspruch 11, welche im Inneren des horizontalen Teils (3) der Kammer mindestens eine obere Innenwand (36) aufweist, die einen unteren freien Rand (36a) aufweist, der von einer Wand (30') des horizontalen Teils (3) der Kammer beabstandet ist, so dass ein Durchgang zwischen der Wand (30') und dem unteren freien Rand (36a) gebildet wird und das Gas gezwungen wird, sich mit der Flüssigkeit während der Passage durch den horizontalen Teil (3) der Kammer zu vermischen.

13. Vorrichtung nach den Ansprüchen 11 und 12, wobei sich der untere freie Rand (36a) der oberen Innenwand (37) im Wesentlichen auf dem gleichen Niveau oder einem niedrigeren Niveau als dem des oberen freien Rands (35a) der unteren vertikalen Innenwand (35) befindet.

14. Verfahren zum Inkontaktbringen eines Gases und einer Flüssigkeit mit Hilfe der Vorrichtung nach einem der vorhergehenden Ansprüche, wobei in die Kammer (E) stromaufwärts der Mittel zum Rühren (4A; 4B; 4C; 4D) ein Strom (G) des Gases und ein Strom (L) der Flüssigkeit eingeleitet werden.

15. Verwendung der Vorrichtung nach einem der Ansprüche 1 bis 13 zum Inkontakbringen eines Gases und einer Flüssigkeit.

## Claims

1. Device (1) for bringing a gas and a liquid into contact comprising an enclosure (E), first means (5) for introducing into said enclosure and circulating therein a gas stream (G), second means (6) for introducing into said enclosure and circulating therein a liquid stream (L) that circulates inside the enclosure (E) in the same direction as the gas stream (G) , said enclosure (E) comprising at least a first portion (2) in which the gas stream (G) and the liquid stream (L) descend, said device comprising means for mixing (4A; 4B; 4C; 4D) the gas stream (G) and the liquid stream (L), which are positioned inside said first portion (2) of the enclosure (E) in the path of the gas stream and liquid stream and which are capable of locally deflecting upward, and/or of locally causing to rise, at least one portion of the gas stream and liquid stream, so as to locally create turbulences in the gas stream and in the liquid stream, and which comprise at least one static mixing element (40A), which mixing element (40A) has a concave curved upper surface (40c), the curvature of which makes it possible to locally deflect upward at least one portion of the descending gas stream and of the descending liquid stream, so as to locally create turbulence in the descending gas stream and in the descending liquid stream, **characterized in that** each mixing element (40) is fixed inside said first portion (2) of the enclosure (E) at or in the vicinity of one (40a) of its edges and comprises, opposite this fixing edge (40a), a free edge (40b) which is located at a level lower than the fixing edge (40a) of the mixing element (40A), but at a level higher than the lowest point of the curved upper face (40c) of the mixing element (40A).

2. Device according to claim 1, wherein the mixing means (4A) comprise a plurality of mixing elements (40A) which are spaced apart in the vertical direction, and preferably which are also spaced apart in the horizontal direction.

3. Device according to claim 1 or 2, wherein said first portion (2) of the enclosure comprises a central axis (2a) and the free edge (40b) of each mixing element (40A) is positioned substantially at or near this central axis (2a).

4. Device according to any one of the preceding claims, wherein the admission of the liquid stream (L) into the enclosure (E) comprises an intake conduit (23) which comprises, on the outside of the enclosure (E), an opening (23a) for admission of said liquid stream (L) and, inside the enclosure (E), an opening (23b) for the introduction into the enclosure (E) of the liquid stream (L).

5. Device according to claim 4, wherein the mixing means (4A; 4B; 4C) are substantially centered on an axis (2a) and said opening (23b) for introducing the liquid stream (L) into the enclosure (2) is positioned substantially at or close to this axis (2a).

6. Device according to one of claims 4 or 5, wherein the intake conduit (23) is inclined relative to the central axis (2a) by an angle substantially equal to 45°.

7. Device according to claim 4 and one of claims 1 to 3, wherein the opening (23b) of the intake conduit (23) for introducing the descending liquid stream (L) into the enclosure (E) is positioned facing the highest mixing element (40A).

8. Device according to claim 7, wherein the highest mixing element (40A) having a concave curved upper surface (40c), the curvature of which makes it possible to locally deflect at least one portion of the descending gas stream and the descending liquid stream upward, so as to locally create turbulences in the descending gas stream and in the descending liquid stream, the opening (23b) of the intake conduit (23) for introducing the descending liquid stream (L) into the enclosure (E) is positioned with regard to this curved upper face (40c) of the highest mixing element (40A) such that the liquid stream (L) at the outlet of the intake conduit (23) is directed toward this curved upper face (40c).

9. Device according to one of the preceding claims, wherein the first means for introducing and circulating the gas stream (G) in said enclosure comprise a fan or compressor (5) which is connected to the enclosure (E) and which makes it possible to introduce and forcefully circulate a gas stream (G) to the inside the enclosure, preferably with an adjustable flow rate.

10. Device according to one of the preceding claims, wherein the second means for introducing and circulating the liquid stream (L) in said enclosure comprise a pump (6) which is connected to the enclosure (E) and which makes it possible to introduce a liquid stream (L) inside the enclosure (E), preferably with an adjustable flow rate.

11. Device according to one of the preceding claims, wherein the enclosure comprises, downstream from the mixing means (4A), a horizontal portion (3) inside which is fixed at least one lower vertical internal wall (35) which comprises a free upper edge (35a) spaced apart from a wall (30) of this horizontal portion (3) of the enclosure, so as to provide, between this wall (30) and said free upper edge (35a), a passage for the gas and the liquid.

12. Device according to claim 11, comprising, inside the horizontal portion (3) of the enclosure, at least one upper internal wall (36), which comprises a free lower edge (36a) spaced apart from a wall (30') of the horizontal portion (3) of the enclosure, so as to provide a passage between this wall (30') and said free lower edge (36a) and to force the gas to mix with the liquid as it passes through the horizontal portion (3) of the enclosure.

13. Device according to claims 11 and 12, wherein the free lower edge (36a) of the upper internal wall (37) is positioned substantially at the same level as or at a lower level than the free upper edge (35a) of the lower vertical internal wall (35).

14. Method for bringing a gas into contact with a liquid by means of the device set out in one of the preceding claims, in which a stream (G) of said gas and a stream (L) of said liquid are introduced, into the vertical enclosure (E) upstream from the mixing means (4A; 4B; 4C; 4D).

15. Use of the device set out in one of claims 1 to 13 for bringing a gas into contact with a liquid.
